Europäisches Patentamt

European Patent Office

Office européen des brevets

(11) Veröffentlichungsnummer: **0 265 604 B1**

(12) **EUROPÄISCHE PATENTSCHRIFT**

(45) Veröffentlichungstag der Patentschrift: **07.10.92**

(21) Anmeldenummer: **87111446.8**

(22) Anmeldetag: **07.08.87**

Die Akte enthält technische Angaben, die nach dem Eingang der Anmeldung eingereicht wurden und die nicht in dieser Patentschrift enthalten sind.

(51) Int. Cl.5: **C08G 8/36**, C08J 5/24, B32B 27/04, B32B 27/42, C08G 16/02

(54) Verfahren zur Herstellung modifizierte Phenolharze und ihre Verwendung.

(30) Priorität: **31.10.86 DE 3637039**

(43) Veröffentlichungstag der Anmeldung:
**04.05.88 Patentblatt 88/18**

(45) Bekanntmachung des Hinweises auf die Patenterteilung:
**07.10.92 Patentblatt 92/41**

(84) Benannte Vertragsstaaten:
**BE CH DE FR GB IT LI NL SE**

(56) Entgegenhaltungen:
**DE-A- 2 647 321**
**DE-A- 2 750 704**
**US-A- 4 255 554**

(73) Patentinhaber: **RÜTGERSWERKE AKTIENGE-SELLSCHAFT**
**Mainzer Landstrasse 217**
**W-6000 Frankfurt am Main 1(DE)**

(72) Erfinder: **Jellinek, Karl, Dr.**
**Mörikeweg 1**
**W-5860 Iserlohn/Letmathe(DE)**
Erfinder: **Meier, Bert, Dr.**
**Zedernweg 89**
**W-4230 Wesel-Blumenkamp(DE)**
Erfinder: **Zehrfeld, Jürgen, Dr.**
**Elisabethstrasse 32**
**W-4223 Voerde 2(DE)**
Erfinder: **Müller, Rolf, Dr.**
**Margarethenstrasse 49**
**W-4100 Duisburg 17(DE)**

## Beschreibung

Die Erfindung betrifft modifizierte, flüssige oder schmelzbare Phenolharze, die nur geringe Mengen flüchtiger Lösemittel enthalten und die sowohl im Prepregprozeß als auch im Naßlaminierverfahren zu hochbelastbaren, faserverstärkten Bauteilen für Kraft-und Schienenfahrzeuge verarbeitet werden können.

Flüssige Phenolharze sind entweder wäßrige Resollösungen oder Lösungen von festen Resolen oder festen Novolaken in geeigneten Lösungsmitteln, vor allem in Alkoholen. Ihr Gehalt an flüchtigen Verbindungen - Wasser, Lösemittel, freier Formaldehyd -beträgt im allgemeinen mindestens 20 %. Während der Verarbeitung dieser Harze zu Faserverbundwerkstoffen müssen die flüchtigen Bestandteile nach der Imprägnierung mittels eines besonderen, aufwendigen Trocknungsprozesses entfernt werden, da sonst beim Heißpressen der imprägnierten bzw. auch mehr oder weniger vorgelierten (vorkondensierten) Prepregmatten besonders diese flüchtigen Anteile, nebem dem in geringen Mengen durch Polykondensation entstehenden Reaktionswasser, zu einer beträchtlichen Blasenbildung in den Laminaten führen, die den Lagenverbund stören und so zu einer Delaminierung führen.

Es ist daher Aufgabe der Erfindung, flüssige oder schmelzbare Phenolharze zu entwickeln, mit denen Fasermatten imprägniert und dann anschließend ohne besondere Trocknung heiß verpreßt werden können, wobei keine Delaminierungen auftreten.

Die Lösung der Aufgabe erfolgt durch Herstellung und Verwendung eines modifizierten Phenolharzes gemäß der Ansprüche 1 bis 10.

Die Delaminierungseffekte lassen sich vermeiden, wenn die imprägnierten Matten keine oder nur geringe Mengen flüchtiger Bestandteile enthalten. Will man den hierzu notwendigen Trockenaufwand vermeiden, müssen Harze bereitgestellt werden, die flüssig oder schmelzbar sind, aber nur geringe Mengen flüchtiger Bestandteile enthalten.

Hierzu bietet sich an, das im wesentlichen wasserfreie Phenolharz in Furfurylalkohol zu lösen, denn Furfurylalkohol ist bekannt als reaktiver Weichmacher für Phenolharze (Ullmanns Encyklopadie der technischen Chemie, 4. Auflage, Bd. 12, S. 19).

Leider führen diese Lösungen nicht zu dem gewünschten Ergebnis. Diese Lösungen stellen Bindemittelsysteme dar, mit denen Fasermatten zwar imprägniert werden können, die aber nachher bei den üblichen Verpressungs-und Härtungstemperaturen von 170 bis 180 °C nicht zu einem einwandfreien Faserverbundmaterial verpreßt werden können. Erhalten werden stark delaminierte Faserverbunde mit äußerst porösen und rauhen Oberflächen, die deshalb in der Praxis keine Verwendung finden.

Es wurde nun gefunden, daß Phenolharze, die dahingehend modifiziert sind, daß Phenolresololigomere mit einer phenolischen Komponente und Furfurylalkohol cokondensiert sind, für die Herstellung einwandfreier Faserverbundmaterialien geeignet sind, ohne daß die imprägnierten Matten gesondert getrocknet werden müssen.

Dies ist insofern besonders überraschend, als Phenol-Furfurylalkohol-Formaldehyd-Cokondensate, die durch gemeinsame Kondensation von Phenol, Furfurylalkohol und Formaldehyd hergestellt werden, als Imprägnierharze für im Heißpreßverfahren zu verarbeitende Fasermatten nicht geeignet sind.

Die Vielzahl der verschiedenen Reaktionsmöglichkeiten bei dieser Kondensation zu Homo- und Copolykondensaten mit unterschiedlichen Struktureinheiten sowie auch durch Homopolymerisation der verschiedensten Möglichkeiten der Kettenübertragung hat dazu geführt, daß bisher auf Basis derartiger Phenolharz-/Furfurylalkohol-Kombinationen keine brauchbaren, d. h. homogen verpreßten Faserverbundmaterialien hergestellt werden konnten.

Wird die Kondensation aber so geführt, daß zuerst aus einer phenolischen Komponente und Formaldehyd Phenolresololigomere gebildet werden und diese dann nach Entfernen der leichtflüchtigen Bestandteile des Reaktionsmediums in einer Nachreaktion mit der verbliebenen phenolischen Komponente und dem dann zugesetzten Furfurylalkohol cokondensiert werden, entsteht ein modifiziertes Phenolharz, mit dem imprägnierte Fasermatten hergestellt werden können, die sich ohne Zwischenbehandlungsschritt heiß verpressen lassen und zu homogenen Faserverbundmaterialien führen.

Die so hergestellten modifizierten Phenolharze können feste, bei erhöhter Temperatur schmelzbare Harze darstellen oder Lösungen der jeweiligen Harze in überschüssigem Furfurylalkohol. Dabei beträgt der molare Anteil der Furfurylalkoholkomponente, gebunden oder ungebunden, 10 bis 100 %, bevorzugt 20 bis 50 %, des Anteils der Phenolkomponente. Erreicht wird dies dadurch, daß bei dem 2. Reaktionsschritt der molare Anteil des eingesetzten Furfurylalkohols 10 bis 100 %, bevorzugt 20 bis 50 %, der ursprünglich eingesetzten phenolischen Komponente beträgt.

Die erfindungsgemäß hergestellten Phenolharze können zusätzlich weitere Plastifizierungsmittel und/oder Härtungsbeschleuniger enthalten.

Plastifizierungsmittel sind übliche verträgliche, weichmachende Stoffe, die dem Harz entweder direkt oder in Furfurylalkohol gelöst zugegeben werden. Beispiele sind Polyamide, Polyvinylacetale oder Polyole mit verschiedendstem chemischem Aufbau.

Härtungsbeschleuniger sind Säuren (Aminosulfonsäuren, Salicylsäure) oder sauer reagierende Salze.

Die Herstellung der erfindungsgemäßen Harze erfolgt in zwei Reaktionsstufen. In der ersten Stufe wird eine phenolische Komponente in alkalischem Medium mit Formaldehyd oder einer Formaldehyd abspaltenden Verbindung bei 50 bis 100 °C umgesetzt. Als phenolische Komponente können ein- oder mehrkernige Phenole oder Gemische der genannten Verbindungsklassen eingesetzt werden, und zwar sowohl ein- als auch mehrkernige Phenole.

Beispiele hierfür sind das Phenol selbst, sowie dessen alkyl-substituierte Homologe, wie o-, m- oder p-Kresol, Xylole oder höher alkylierte Phenole, außerdem halogensubstituierte Phenole wie Chlor- oder Bromphenol und mehrwertige Phenole wie Resorcin oder Brenzkatechin, sowie mehrkernige Phenole wie Naphthole, Bisphenol A oder Bisphenol F.

Die phenolischen Komponenten und Formaldehyd werden bevorzugt im molaren Verhältnis 1 : 0,9 bis 1 : 2,0 eingesetzt.

Die Umsetzung wird durch alkalische Stoffe katalysiert. Bevorzugte Kondensationskatalysatoren sind tertiäre Amine.

Nach einer Reaktionszeit, die je nach gewählter Reaktionstemperatur im Bereich von 5 min bis 10 h liegt, werden in an sich bekannter Weise, bevorzugt unter Vakuum, Wasser und flüchtige Bestandteile aus dem Reaktionsmedium entfernt. Danach werden 10 bis 100, bevorzugt 20 bis 50 Molprozent, bezogen auf die eingesetzte phenolische Komponente, Furfurylalkohol zugegeben und das Reaktionsgemisch erneut 0,5 bis 12 h lang bei 60 bis 90 °C behandelt.

Die resultierenden Harze oder -lösungen sind bei Raumtemperatur flüssig oder wachsartig und werden im Temperaturbereich bis 70 °C flüssig. Mit den flüssigen oder aufgeschmolzenen Harzen werden in an sich bekannter Weise Fasermatten imprägniert. Dabei können alle handelsüblichen Fasermatten, Gewebe oder Vliese eingesetzt werden. Bevorzugt wird jedoch die Glasfasermatte vom Typ 113 eingesetzt sowie solche, die mit Silanen oder verdünnten Harzlösungen vorimprägniert sind.

Für die Verarbeitung zu Laminaten auf dem Wege des Prepreg-Prozesses können die erfindungsgemäßen Harze ohne Zusätze eingesetzt werden. Die Harze werden -gegenbenenfalls nach vorherigem Aufschmelzen - z. B. durch Aufrakeln auf die Fasermatten (z. B. Wirrfasermatten) appliziert. Die beharzten Matten werden nicht getrocknet. Jedoch ist im allgemeinen eine Wärmebehandlung - z.B. durch einen erwärmten Kalander -zweckmäßig, durch die eine gewisse Gelierung des Harzes bewirkt wird, so daß die Matten bei Raumtemperatur klebefrei werden. Die auf diese Weise hergestellten Prepregs sind mehrere Monate lagerfähig. Sie werden schließlich nach entsprechendem Zuschneiden aufeinander geschichtet und in entsprechend ausgerüsteten Heißpressen zu Formteilen von 2 bis 4 mm Wandstärke verpreßt. Die hierfür erforderliche Preßtemperatur liegt im allgemeinen bei 170 bis 200 °C, der Preßdruck bis zu etwa 6 N/mm$^2$, die Preßzeit - je nach Wandstärke - bei ca. 10 min. Die auf diese Weise hergestellten Formteile eignen sich als Bauteile für Kraft- und Schienenfahrzeuge, z. B. für Motorverkapselungen sowie für Fahrzeugdächer und Wandpartien.

Die mit den erfindungsgemäß hergestellten Phenolharzen gefertigten Formteile besitzen gegenüber den mit Polyamiden, Polyethylen oder ungesättigten Polyestern hergestellten Produkten vor allem den Vorteil einer bemerkenswert hohen Dauertemperaturbeständigkeit, die in der Größenordnung von über 200 °C liegt. Die Duktilität der Formteile, gemessen an der Arbeitsaufnahme beim Durchstoßversuch, liegt in derselben Größenordnung wie bei Anwendung von Polyamiden. Die Biegefestigkeit übertrifft die von Formteilen, die mit Phenolharzen herkömmlicher Art gefertigt werden.

Es ist ein weiterer Vorteil der mit den erfindungsgemäß hergestellten Phenolharzen gefertigten Formteile, daß sie schwer entflammbar sind und daß im Falle eines Brandes ihre Rauchgasdichte besonders niedrig ist. Letzteres ist besonders wichtig bei Verwendung dieser Formteile als Bestandteile von Innenverkleidungen in Fahrzeugen.

Die erfindungsgemäß hergestellten Phenolharze können auch auf dem Wege der Naßtechnologie zu Laminaten verarbeitet werden. Da die Preßtemperatur in diesem Fall im allgemeinen relativ niedrig sind, muß hierbei das Harz mit einer hierfür geeigneten Säure als Härter versetzt werden. Hierfür kommen relativ milde reagierende Säuren in Betracht, z. B. Phosphorsäure, Oxalsäure oder Borsäure. Die Säuremenge muß so bemessen sein, daß einerseits das Harz eine für die Laminierung ausreichende Gebrauchsdauer aufweist, andererseits unter den gegebenen Preßbedingungen (z. B. 60 bis 80 °C) eine Aushärtung innerhalb von einigen Minuten erzielt wird.

## Patentansprüche

1. Verfahren zur Herstellung von mit Furfurylalkohol modifizierten Phenolharze, **dadurch gekennzeichnet,** daß eine phenolische Komponente und Formaldehyd im molaren Verhältnis von 1 : 0,9 bis 1 : 2 in alkalischem Medium bei 50 bis 100 °C 5 Minuten bis 10 Stunden lang vorkondensiert werden, danach unter Vakuum Wasser und flüchtige Bestandteile aus dem Reationsmedium entfernt und darauffolgend Furfurylalkohol in einer Menge, daß der molare Anteil von eingesetztem Furfurylalkohol 10 bis 100 % des Anteils an eingesetzter phenolischer Komponente beträgt, zugegeben werden und das Reaktionsgemisch erneut 0,5 bis 12 Stunden lang bei 60 bis 90 °C behandelt wird.

2. Verfahren nach Anspruch 1, **dadurch gekennzeichnet,** daß der molare Anteil von eingesetztem Furfurylalkohol 25 bis 50 % des Anteils an eingesetzter phenolischer Komponente beträgt.

3. Verfahren nach den Ansprüchen 1 und 2, **dadurch gekennzeichnet,** daß als Kondensationskatalysator ein tertiäres Amin verwendet wird.

4. Verwendung des gemäß der Ansprüche 1 bis 3 hergestellten Phenolharzes zur Herstellung von imprägnierten Glasfasermatten, die im Heißpreßverfahren verarbeitet werden.

## Claims

1. A process for the preparation of phenol resins modified with furfuryl alcohol, characterized in that a phenol component and formaldehyde in a molar ratio of from 1 : 0.9 to 1 : 2 are precondensed in an alkaline medium at 50 to 100°C for between 5 minutes and 10 hours, then water and volatile constituents are removed from the reaction medium under vacuum and after that furfuryl alcohol is added in a quantity such that the molar proportion of furfuryl alcohol used amounts to from 10 to 100% of the proportion of phenol component used, and the reaction mixture is again treated at from 60 to 90°C for between 0.5 and 12 hours.

2. A process according to Claim 1, characterized in that the molar proportion of furfuryl alcohol used amounts to from 25 to 50% of the proportion of phenol component used.

3. A process according to Claims 1 and 2, characterized in that a tertiary amine is used as a condensation catalyst.

4. Use of the phenol resin prepared according to Claims 1 to 3 for the preparation of impregnated glass-fibre mats which are treated in the hot-press process.

## Revendications

1. Procédé de préparation de résines phénoliques modifiées par de l'alcool furfurylique, caractérisé en ce qu'un composant phénolique et du formaldéhyde dans un rapport molaire de 1:0,9 à 1:2 sont précondensés en milieu alcalin entre 50 et 100°C pendant 5 minutes à 10 heures, que l'eau et les constituants volatils sont ensuite éliminés sous vide du milieu réactionnel, que par la suite de l'alcool furfurylique est ajouté en une quantité telle que la fraction molaire d'alcool furfurylique mis en oeuvre représente 10 à 100% de la fraction de composant phénolique employé et que le mélange réactionnel est retraité pendant 0,5 à 12 heures entre 60 et 80°C.

2. Procédé selon la revendication 1, caractérisé en ce que la fraction molaire d'alcool furfurylique mis en oeuvre représente 25 à 50% de la fraction de composant phénolique mis en oeuvre.

3. Procédé selon les revendications 1 et 2, caractérisé en ce qu'on emploie une amine tertiaire en tant que catalyseur de condensation.

4. Utilisation de la résine phénolique préparée selon les revendications 1 à 3 pour la fabrication de mats de fibres de verre imprégnés qui sont transformés par le procédé de pressage à chaud.